# EUROPEAN PATENT APPLICATION

(11) **EP 4 588 704 A1**
(43) Date of publication of application: **23.07.2025**
(21) Application number: 23902691.7
(22) Date of filing: 12.12.2023
(51) Int. Cl.: B60K 11/02, B60K 11/04, B60H 1/00

(54) **HEAT EXCHANGER AND THERMAL MANAGEMENT SYSTEM**

(30) Priority: 15.12.2022 CN 202211626305
(71) Applicant: Wuxi InfiMotion Propulsion Technology Co., Ltd., Wuxi, Jiangsu 214181 (CN); Wuxi InfiMotion Technology Co., Ltd., Wuxi, Jiangsu 214181 (CN)
(72) Inventor: LIU, Feng, Wuxi, Jiangsu 214181 (CN); CHEN, Yun, Wuxi, Jiangsu 214181 (CN); HAN, Tao, Wuxi, Jiangsu 214181 (CN); YU, Haisheng, Wuxi, Jiangsu 214181 (CN); LIN, Xiaozhe, Wuxi, Jiangsu 214181 (CN)
(74) Representative: Michalski Hüttermann & Partner Patentanwälte mbB
(86) International application number: PCT/CN2023/138086
(87) International publication number: WO 2024/125495

(57) **Abstract**

The present invention provides a heat exchanger and a thermal management system. A heat exchanger (100) includes a multilayer plate assembly (10). The multilayer plate assembly (10) includes a refrigerant plate (11), an oil plate (12), and a coolant plate (13) which are stacked. The multilayer plate assembly (10) further includes a refrigerant cavity (113), an oil cavity (124), and a coolant cavity (134) formed by the refrigerant plate (11), the oil plate (12), and the coolant plate (13).

## Description

### TECHNICAL FIELD

The present invention relates to the field of automobile thermal management technology, and in particular to a heat exchanger and a thermal management system.

### BACKGROUND

At present, new energy vehicles are becoming more and more popular. The range of the new energy vehicles has always been an unavoidable topic. The energy consumption of the thermal management system for the battery, the motor, and the passenger compartment air-conditioning accounts for a significant portion of the battery pack's power. The thermal management for the motor also affects the performance of the motor. The motor is mainly cooled and heat recovered through heat exchangers.

### SUMMARY

The present invention provides a heat exchanger and a thermal management system.

The present invention discloses a heat exchanger, which can directly perform heat exchange among an oil, a coolant, and a refrigerant, and includes a multilayer plate assembly, where the multilayer plate assembly includes a refrigerant plate, an oil plate, and a coolant plate which are stacked, and the multilayer plate assembly further includes a refrigerant cavity, an oil cavity, and a coolant cavity which are defined by the refrigerant plate, the oil plate, and the coolant plate.

Further, each of the refrigerant plate, the oil plate, and the coolant plate includes a main plate portion and a side plate portion extending downwardly from a periphery of the main plate portion, and the refrigerant plate defines a top surface and a side surface of the refrigerant cavity, the oil plate defines a top surface and a side surface of the oil cavity, and the coolant plate defines a top surface and a side surface of the coolant cavity.

Further, a plurality of protrusions are provided on the main plate portion of the coolant plate and protrude toward the coolant cavity; and a fin is provided within the oil cavity.

Further, the oil plate is disposed between the refrigerant plate and the coolant plate.

Further, the heat exchanger includes a plurality of multilayer plate assemblies, and refrigerant cavities in the plurality of multilayer plate assemblies are communicated with each other through a refrigerant channel, oil cavities in the plurality of multilayer plate assemblies are communicated with each other through an oil channel, and coolant cavities in the plurality of multilayer plate assemblies are communicated with each other through a coolant channel, the refrigerant channel, the oil channel, and the coolant channel each passing through refrigerant plates, oil plates, and coolant plates of the plurality of multilayer plate assemblies.

Further, the refrigerant channel includes a refrigerant inflow channel and a refrigerant outflow channel, the oil channel includes an oil inflow channel and an oil outflow channel, and the coolant channel includes a coolant inflow channel and a coolant outflow channel, and the refrigerant plates, the oil plates, and the coolant plates are each provided with six through holes, for the refrigerant inflow channel, the refrigerant outflow channel, the oil inflow channel, the oil outflow channel, the coolant inflow channel, and the coolant outflow channel to pass through, respectively.

Further, the refrigerant inflow channel, the oil outflow channel, and the coolant inflow channel are located on one side of the plurality of multilayer plate assemblies, and the refrigerant outflow channel, the oil inflow channel, and the coolant outflow channel are located on the other side of the plurality of multilayer plate assemblies.

Further, the refrigerant inflow channel and the refrigerant outflow channel are respectively communicated with a refrigerant inlet and a refrigerant outlet, the oil inflow channel and the oil outflow channel are respectively communicated with an oil inlet and an oil outlet, and the coolant inflow channel and the coolant outflow channel are respectively communicated with a coolant inlet and a coolant outlet, and the refrigerant inlet and the refrigerant outlet are disposed at a top of the heat exchanger, and the oil inlet, the oil outlet, the coolant inlet, and the coolant outlet are disposed at a bottom of the heat exchanger.

Further, the coolant inflow channel and the coolant outflow channel are provided at one pair of diagonal corners of the multilayer plate assemblies, and the oil inflow channel and the oil outflow channel are provided at the other pair of diagonal corners of the multilayer plate assemblies.

Further, the oil channel has a diameter the same as a diameter of the coolant channel, and the refrigerant channel has a diameter smaller than the diameter of the oil channel and the diameter of the coolant channel, and the refrigerant channel is located between the oil channel and the coolant channel on a same side of the plurality of multilayer plate assemblies.

Further, the heat exchanger further includes a base plate provided at a bottom thereof, where a bottom surface of an upper one of the refrigerant cavity, the oil cavity, and the coolant cavity is defined by the oil plate, the coolant plate, or the refrigerant plate adjacent to the upper one, and a bottom surface of a lowermost one of the refrigerant cavity, the oil cavity, and the coolant cavity is defined by the base plate.

Further, adjacent two of the refrigerant plate, the oil plate, and the coolant plate are connected to each other by aluminum alloy brazing, and the coolant includes water.

The present invention further discloses a thermal management system, including a motor, a liquid-cooled air conditioner, a liquid-cooled battery pack, a motor water-cooling pipeline, an air-conditioning refrigerant circuit, an air-conditioning water circuit, and a battery temperature control water circuit. The motor is provided with the heat exchanger as described above, and the heat exchanger is connected to the motor water-cooling pipeline and the air-conditioning refrigerant circuit. A first heat exchanger is provided between the air-conditioning refrigerant circuit and the air-conditioning water circuit, and a second heat exchanger is provided between the air-conditioning water circuit and the battery temperature control water circuit.

Further, the thermal management system has five modes, which include a high-temperature driving mode, a normal-temperature driving mode, a low-temperature driving mode, a low-temperature cold-start mode, and a battery temperature maintenance mode during parking. In the high-temperature driving mode, the motor is first cooled through the motor water-cooling pipeline, and when the motor is not cooled sufficiently through the motor water-cooling pipeline, the air-conditioning refrigerant circuit assists in cooling the motor through the heat exchanger. In the normal-temperature driving mode, the motor is cooled through the motor water-cooling pipeline, and the air-conditioning refrigerant circuit is not involved in cooling the motor. In the low-temperature driving mode, the air-conditioning refrigerant circuit recovers heat from the motor through the heat exchanger, heats the air conditioner through the first heat exchanger and the air-conditioning water circuit, and heats the battery pack through the second heat exchanger and the battery temperature control water circuit. In the low-temperature cold-start mode, the motor heats itself first, and the air-conditioning refrigerant circuit absorbs heat from the motor through the heat exchanger, heats the air conditioner through the first heat exchanger and the air-conditioning water circuit, and heats the battery pack through the second heat exchanger and the battery temperature control water circuit. In the battery temperature maintenance mode during parking, the motor has residual heat, and the air-conditioning refrigerant circuit recovers the residual heat from the motor through the heat exchanger to heat the battery pack.

The present invention further discloses a thermal management system, including a motor, a refrigerant-based air conditioner, a liquid-cooled battery pack, a motor water-cooling pipeline, an air-conditioning pipeline, and a battery temperature control water circuit. The motor is provided with the heat exchanger as described above, and the heat exchanger is connected to the motor water-cooling pipeline and the air-conditioning pipeline. A first heat exchange is provided between the air-conditioning pipeline and the battery temperature control water circuit.

Further, the thermal management system has five modes, which include a high-temperature driving mode, a normal-temperature driving mode, a low-temperature driving mode, a low-temperature cold-start mode, and a battery temperature maintenance mode during parking. In the high-temperature driving mode, the motor is first cooled through the motor water-cooling pipeline, and when the motor is not cooled sufficiently through the motor water-cooling pipeline, the air-conditioning pipeline assists in cooling the motor through the heat exchanger. In the normal-temperature driving mode, the motor is cooled through the motor water-cooling pipeline, and the air-conditioning pipeline is not involved in cooling the motor. In the low-temperature driving mode, the air-conditioning pipeline recovers heat from the motor through the heat exchanger to heat the air conditioner, and heats the battery pack through the first heat exchanger and the battery temperature control water circuit. In the low-temperature cold-start mode, the motor heats itself first, and the air-conditioning pipeline absorbs heat from the motor through the heat exchanger to heat the air conditioner, and heats the battery pack through the first heat exchanger and the battery temperature control water circuit. In the battery temperature maintenance mode during parking, the motor has residual heat, and the air-conditioning pipeline recovers the residual heat from the motor through the heat exchanger to heat the battery pack.

The present invention further discloses a thermal management system, including a motor, a refrigerant-based air conditioner, a refrigerant-based battery pack, a motor water-cooling pipeline, an air-conditioning pipeline, and a battery temperature control refrigerant circuit. The motor is provided with the heat exchanger as described above, where the heat exchanger is connected to the motor water-cooling pipeline and the air-conditioning pipeline, and the air-conditioning pipeline is connected to the battery temperature control refrigerant circuit.

Further, the thermal management system has five modes, which include a high-temperature driving mode, a normal-temperature driving mode, a low-temperature driving mode, a low-temperature cold-start mode, and a battery temperature maintenance mode during parking. In the high-temperature driving mode, the motor is first cooled through the motor water-cooling pipeline, and when the motor is not cooled sufficiently through the motor water-cooling pipeline, the air-conditioning pipeline assists in cooling the motor through the heat exchanger. In the normal-temperature driving mode, the motor is cooled through the motor water-cooling pipeline, and the air-conditioning pipeline is not involved in cooling the motor. In the low-temperature driving mode, the air-conditioning pipeline recovers heat from the motor through the heat exchanger to heat the air conditioner, and heats the battery pack through the battery temperature control refrigerant circuit. In the low-temperature cold-start mode, the motor heats itself first, and the air-conditioning pipeline recovers heat from the motor through the heat exchanger to heat the air conditioner, and heats the battery pack through the battery temperature control refrigerant circuit. In the battery temperature maintenance mode during parking, the motor has residual heat, and the air-conditioning pipeline recover the residual heat from the motor through the heat exchanger to heat the battery pack.

The heat exchanger according to the present invention includes a multilayer plate assembly, where the multilayer plate assembly includes a refrigerant plate, an oil plate, and a coolant plate, and uses oil, coolant, and refrigerant for heat exchange, which increases the cooling efficiency of the motor at high temperatures and the heat recovery efficiency of the motor at low temperatures.

It is to be understood that the foregoing general description and the following detailed description are exemplary and explanatory only, and are not intended to limit the present invention.

### BRIEF DESCRIPTION OF DRAWINGS

The accompanying drawings herein, which are incorporated into and constitute a part of this specification, illustrate embodiments consistent with the present invention and, together with the specification, serve to explain the principles of the present invention.
FIG. 1 is a perspective view of a multilayer plate assembly according to the present invention.
FIG. 2 is an exploded view of the multilayer plate assembly of FIG. 1.
FIG. 3 is a perspective view of a heat exchange according to the present invention.
FIG. 4 is a cross-sectional view of a refrigerant channel of a heat exchanger according to the present invention.
FIG. 5 is a cross-sectional view of an oil channel of a heat exchanger according to the present invention.
FIG. 6 is a cross-sectional view of a coolant channel of a heat exchanger according to the present invention.
FIG. 7 is a schematic diagram of a thermal management system according to an embodiment of the present invention.
FIG. 8 is a schematic diagram of a thermal management system according to another embodiment of the present invention.
FIG. 9 is a schematic diagram of a thermal management system according to yet another embodiment of the present invention.

Description of reference numerals:
100-heat exchanger; 10-multilayer plate assembly; 11-refrigerant plate; 111-refrigerant inflow channel; 112-refrigerant outflow channel; 113-refrigerant cavity; 114-main plate portion; 115-side plate portion; 116-refrigerant pipe; 12-oil plate; 121-oil inflow channel; 122-oil outflow channel; 123-fin; 124-oil cavity; 125-main plate portion; 126-side plate portion; 127-oil pipe; 13-coolant plate; 131-coolant inflow channel; 132-coolant outflow channel; 133-protrusion; 134-coolant cavity; 135-main plate portion; 136-side plate portion; 137-coolant pipe; 14-through hole; 20-base plate; 21-coolant inlet; 22-coolant outlet; 23-oil inlet; 24-oil outlet; 25-fixing structure; 30-external connector; 31-refrigerant inlet; 32-refrigerant outlet; 33-fixing structure; 200-thermal management system; 210-motor water-cooling pipeline; 221-air-conditioning refrigerant circuit; 222-air-conditioning water circuit; 230-battery temperature control water circuit; 240-first heat exchanger; 250-second heat exchanger; 260-third heat exchanger; 300-thermal management system; 310-motor water-cooling pipeline; 320-air-conditioning pipeline; 330-battery temperature control water circuit; 340-first heat exchanger; 350-second heat exchanger; 400-thermal management system; 410-motor water-cooling pipeline; 420-air-conditioning pipeline; 430-battery temperature control refrigerant circuit.

### DETAILED DESCRIPTION

Reference will now be made in detail to exemplary embodiments, examples of which are illustrated in the accompanying drawings. When the following description refers to the drawings, the same numerals in different drawings indicate the same or similar elements, unless otherwise indicated. Implementations described in the following exemplary embodiments are not intended to be representative of all implementations consistent with the present invention. Rather, they are merely examples of apparatuses and methods consistent with some aspects of the present invention as detailed in the appended claims.

Terminology used herein is for the purpose of describing particular embodiments only and is not intended to limit the present invention. As used in this specification and the appended claims, the singular forms of "a," "an," "the," and "said" are intended to include plural forms as well, unless the context clearly indicates otherwise. It should also be understood that the term "and/or" as used herein refers to and encompasses any or all possible combinations of one or more of the associated listed items.

It should be understood that, although terms first, second, third, etc. may be used herein to describe various types of information, such information should not be limited by these terms. These terms are used only to distinguish the same type of information from one another. For example, the first information may also be referred to as the second information, and similarly, the second information may also be referred to as the first information, without departing from the scope of the present invention. Depending on the context, the word "if" as used herein may be interpreted as "when..." or "upon..." or "in response to determining".

At present, motors are mainly water-cooled. Even with oil-cooled motors, due to the fact that existing heat exchangers can only perform heat exchange between two liquid media, oil needs to exchange heat with water through a heat exchanger, and then the water needs to exchange heat with refrigerant through another heat exchanger. In such a heat exchange mode, the cooling effect on the motor is limited at high temperatures, and the requirement for self-heating of the motor is high and the heat recovery efficiency is low at low temperatures.

In view of this, embodiments of the present invention provide a heat exchanger and a thermal management system, which can directly perform heat exchange among oil, coolant, and refrigerant. The embodiments of the present invention will be described in detail below.

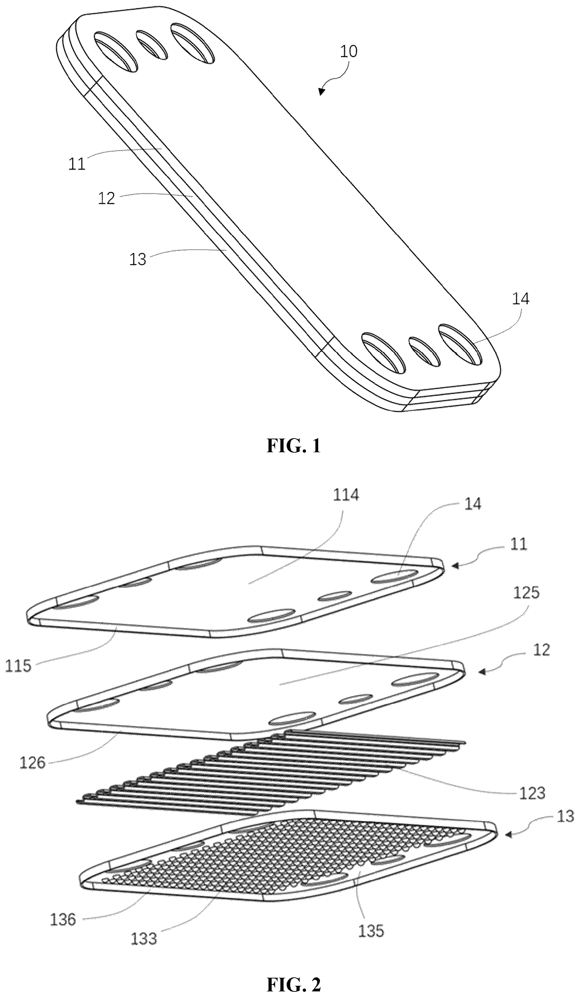

As shown in FIG. 1 and FIG. 2, a heat exchanger 100 according to the present invention includes a plurality of multilayer plate assemblies 10. Each multilayer plate assembly 10 includes a refrigerant plate 11, an oil plate 12, and a coolant plate 13 which are stacked. The multilayer plate assembly 10 further includes a refrigerant cavity 113, an oil cavity 124, and a coolant cavity 134 which are defined by the refrigerant plate 11, the oil plate 12, and the coolant plate 13. The oil plate 12 is disposed between the refrigerant plate 11 and the coolant plate 13, and the oil flowing through the oil plate 12 can not only directly exchange heat with the coolant, but also directly exchange heat with the refrigerant. The coolant may include water, an alcohol-based coolant, or the like.

The refrigerant plate 11 includes a main plate portion 114 and a side plate portion 115 extending downwardly from a periphery of the main plate portion 114. The oil plate 12 also includes a main plate portion 125 and a side plate portion 126 extending downwardly from a periphery of the main plate portion 125. The coolant plate 13 also includes a main plate portion 135 and a side plate portion 136 extending downwardly from a periphery of the main plate portion 135. The main plate portions 114, 125, and 135 each have a rectangular structure with four rounded corners, and the main plate portions 114, 125, and 135 have the same area. The refrigerant plate 11, the oil plate 12, and the coolant plate 13 are each provided with six through holes 14, where three through holes 14 are distributed on one side of the corresponding plate, and the other three through holes 14 are disposed on the other side of the corresponding plate.

A plurality of protrusions 133 are provided on the main plate portion 135 of the coolant plate 13 and protrude toward the coolant cavity 134, where the protrusions 133 are stamped protrusions, and the protrusions 133 are distributed throughout an area between the through holes 14 on both sides of the coolant plate 13. A fin 123 is provided within the oil cavity 124 of the oil plate 12, where the fin 123 is disposed in an area between the through holes 14 on both sides of the oil plate 12 without blocking the through holes 14. The protrusions 133 and the fin 123 increase a contact area between the plate and the fluid and improve the heat exchange efficiency.

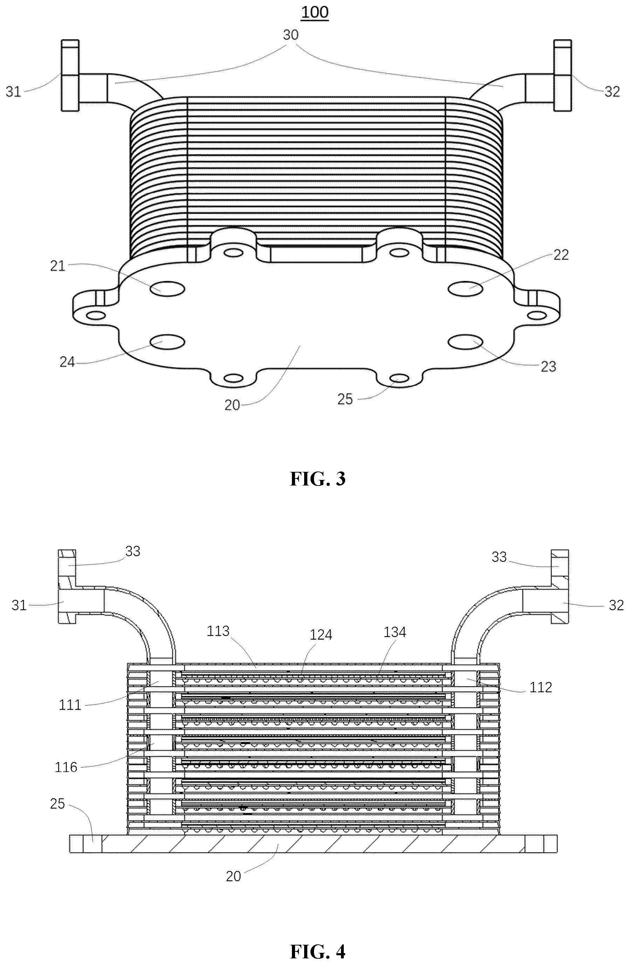

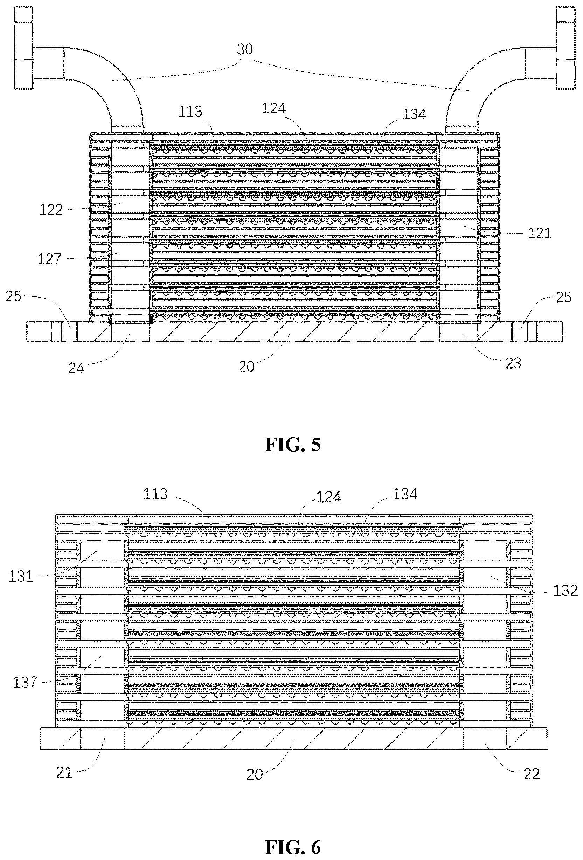

Referring to FIGs. 3 to 6, the heat exchanger 100 further includes a base plate 20 provided at the bottom thereof and an external connector 30 provided at the top thereof. There may be two external connectors 30. An area of the base plate 20 is slightly larger than an area of the main plate portion of the refrigerant plate 11, the oil plate 12, or the coolant plate 13. A plurality of (e.g., six) fixing structures 25 are integrally provided around the base plate 20, and are uniformly distributed on an outer edge of the base plate 20. A fixing structure 33 is provided on the external connector 30. Two fixing structures 33 are respectively provided on two external connectors 30, and are located above a refrigerant inlet 31 and a refrigerant outlet 32, respectively.

The refrigerant plate 11 defines top and side surfaces of the refrigerant cavity 113, the oil plate 12 defines top and side surfaces of the oil cavity 124, and the coolant plate 13 defines top and side surfaces of the coolant cavity 134. A bottom surface of an upper one of the refrigerant cavity 113, the oil cavity 124, and the coolant cavity 134 is defined by an adjacent oil plate 12, coolant plate 13, or refrigerant plate 11. A bottom surface of the lowermost one of the refrigerant cavity 113, the oil cavity 124, and the coolant cavity 134 is defined by the base plate 20.

In particular, referring to FIG. 2 and FIG. 4, the multilayer plate assembly 10 includes the refrigerant plate 11, the oil plate 12, and the coolant plate 13 from top to bottom. An edge of the main plate portion 114 of the refrigerant plate 11 extends downwardly to form the side plate portion 115. The main plate portion 114, the side plate portion 115, and the main plate portion 125 of the oil plate 12 together define the refrigerant cavity 113, where the main plate portion 114, the side plate portion 115, and the main plate portion 125 of the oil plate 12 respectively define a top surface, a side surface, and a bottom surface of the refrigerant cavity 113.

An edge of the main plate portion 125 of the oil plate 12 extends downwardly to form the side plate portion 126, and the main plate portion 125, the side plate portion 126, and the main plate portion 135 of the coolant plate 13 together define the oil cavity 124. An edge of the main plate portion 135 of the coolant plate 13 extends downwardly to form the side plate portion 136, and the main plate portion 135 and the side plate portion 136 are connected to the main plate portion 114 of the refrigerant plate 11 in the multilayer plate assembly 10 below, to define the coolant cavity 134.

In another optional embodiment, the heat exchanger 100 may include only one multilayer plate assembly 10. An edge of the main plate portion 135 of the lowermost coolant plate 13 of the multilayer plate assembly 10 extends vertically and downwardly to form the side plate portion 136, and the side plate portion 136 is connected to the base plate 20 so as to define the coolant cavity 134. That is, the base plate 20 defines a bottom surface of the coolant cavity 134.

Adjacent two of the refrigerant plates 11, the oil plates 12, and the coolant plates 13 of the plurality of multilayer plate assemblies 10 are connected to each other by aluminum alloy brazing. The main plate portion of a single plate defines both a top surface of one cavity and a bottom surface of another cavity, with only one plate separating two fluids from each other, allowing for more efficient heat exchange.

Refrigerant cavities 113 in the plurality of multilayer plate assemblies 10 are communicated with each other through a refrigerant channel, oil cavities 124 in the plurality of multilayer plate assemblies 10 are communicated with each other through an oil channel, and coolant cavities 134 in the plurality of multilayer plate assemblies 10 are communicated with each other through a coolant channel. The refrigerant channel includes a refrigerant inflow channel 111 and a refrigerant outflow channel 112, the oil channel includes an oil inflow channel 121 and an oil outflow channel 122, and the coolant channel includes a coolant inflow channel 131 and a coolant outflow channel 132. The refrigerant inflow channel 111, the refrigerant outflow channel 112, the oil inflow channel 121, the oil outflow channel 122, the coolant inflow channel 131, and the coolant outflow channel 132 correspond to the six through holes 14 in each of the refrigerant plate 11, the oil plate 12, and the coolant plate 13, respectively.

The refrigerant inflow channel 111 and the refrigerant outflow channel 112 each include a plurality of refrigerant pipes 116. The oil inflow channel 121 and the oil outflow channel 122 each include a plurality of oil pipes 127. The coolant inflow channel 131 and the coolant outflow channel 132 each include a plurality of coolant pipes 137. The refrigerant pipe 116, the oil pipe 127, and the coolant pipe 137 are welded to the refrigerant plate 11, the oil plate 12, and the coolant plate 13. The refrigerant pipe 116, the oil pipe 127, and the coolant pipe 137 are all cylindrical pipes. A diameter of the oil pipe 127 is the same as a diameter of the coolant pipe 137, and a diameter of the refrigerant pipe 116 is smaller than the diameter of the oil pipe 127 and the diameter of the coolant pipe 137.

The refrigerant pipe 116 passes through the through hole 14 in one oil plate 12 and the through hole 14 in one coolant plate 13, and is communicated with the through hole 14 in the refrigerant plate 11, so as to communicate adjacent refrigerant cavities 113 with each other. The oil pipe 127 passes through the through hole in one refrigerant plate 11 and the through hole in one coolant plate 13, and is communicated with the through hole 14 in the oil plate 12, so as to communicate adjacent oil cavities 124 with each other. The coolant pipe 137 passes through the through hole in one refrigerant plate 11 and the through hole in one oil plate 12, and is communicated with the through hole 14 in the coolant plate 13, so as to communicate adjacent coolant cavities 134 with each other.

The refrigerant inflow channel 111, the oil outflow channel 122, and the coolant inflow channel 131 are located on one side of the plurality of multilayer plate assemblies 10. The refrigerant outflow channel 112, the oil inflow channel 121, and the coolant outflow channel 132 are located on the other side of the plurality of multilayer plate assemblies 10. The refrigerant inflow channel 111 or the refrigerant outflow channel 112 is located between a corresponding coolant channel and a corresponding oil channel. A diameter of the oil channel is the same as a diameter of the coolant channel, and a diameter of the refrigerant channel is smaller than the diameter of the oil channel and the diameter of the coolant channel. The positions of the through holes 14 correspond to the positions of the refrigerant channel, the oil channel, and the coolant channel.

In an embodiment, the coolant inflow channel 131 and the coolant outflow channel 132 are located on one side of the refrigerant channel, and the oil inflow channel 121 and the oil outflow channel 122 are located on the other side of the refrigerant channel. That is, the two types of channels, the coolant channel and the oil channel, are arranged in parallel.

In another embodiment, the coolant inflow channel 131 and the coolant outflow channel 132 may be provided at one pair of diagonal corners of the plurality of multilayer plate assemblies 10, and the oil inflow channel 121 and the oil outflow channel 122 may be provided at the other pair of diagonal corners of the plurality of multilayer plate assemblies 10. That is, the two types of channels, the coolant channel and the oil channel, are arranged to cross each other.

The refrigerant channel, the coolant channel, and the oil channel are provided such that the three fluids flow through the whole cavity, which lengthens the length of the fluid flow channel. Meanwhile, counter-current heat exchange is formed between the coolant and the oil, and between the refrigerant and the oil, such that the average temperature difference among the coolant, the refrigerant, and the oil in the heat exchanger 100 is maximized, improving the heat exchange efficiency.

The refrigerant inflow channel 111 and the refrigerant outflow channel 112 are communicated with the refrigerant inlet 31 and the refrigerant outlet 32, respectively, the oil inflow channel 121 and the oil outflow channel 122 are communicated with an oil inlet 23 and an oil outlet 24, respectively, and the coolant inflow channel 131 and the coolant outflow channel 132 are communicated with a coolant inlet 21 and a coolant outlet 22, respectively. The refrigerant inlet 31 and the refrigerant outlet 32 are provided at the top of the heat exchanger 100, and the oil inlet 23, the oil outlet 24, the coolant inlet 21, and the coolant outlet 22 are provided at the bottom of the heat exchanger 100.

The refrigerant inlet 31 and the refrigerant outlet 32 are provided in the two external connectors 30, respectively. The oil inlet 23, the oil outlet 24, the coolant inlet 21, and the coolant outlet 22 are provided in the base plate 20. The refrigerant inlet 31, the refrigerant outlet 32, the oil inlet 23, the oil outlet 24, the coolant inlet 21, and the coolant outlet 22 are located at positions corresponding to the positions of the refrigerant inflow channel 111, the refrigerant outflow channel 112, the oil inflow channel 121, the oil outflow channel 122, the coolant inflow channel 131, and the coolant outflow channel 132, respectively.

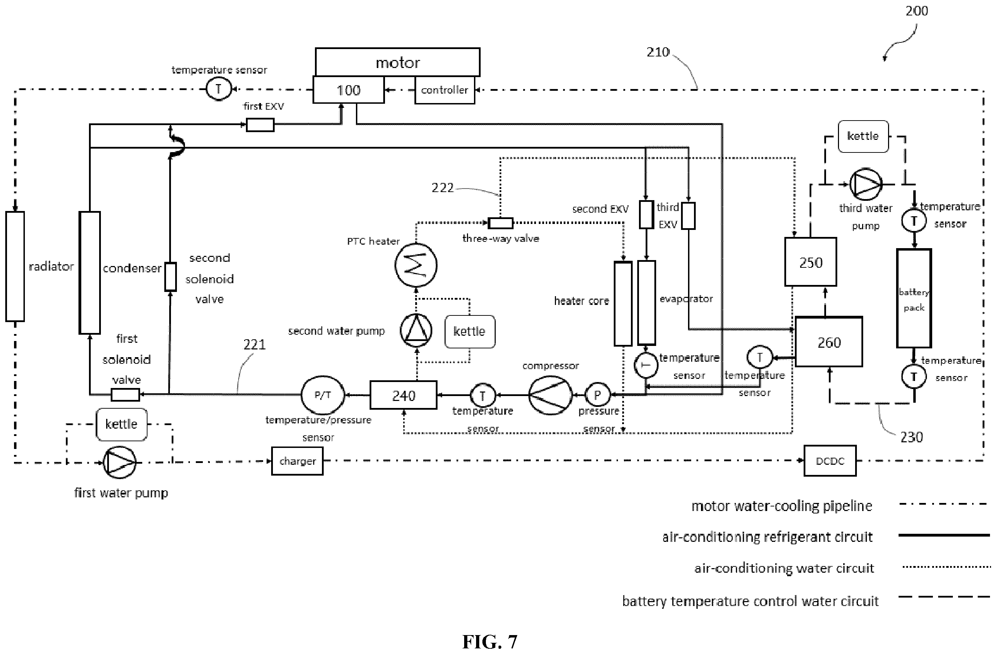

As shown in FIG. 7, the present invention further discloses a thermal management system 200, including a motor, a liquid-cooled air conditioner, a liquid-cooled battery pack, a motor water-cooling pipeline 210, an air-conditioning refrigerant circuit 221, an air-conditioning water circuit 222, and a battery temperature control water circuit 230. The motor is provided with the heat exchanger 100, where the heat exchanger 100 is connected to the motor water-cooling pipeline 210 and the air-conditioning refrigerant circuit 221. A first heat exchanger 240 is provided between the air-conditioning refrigerant circuit 221 and the air-conditioning water circuit 222, a second heat exchanger 250 is provided between the air-conditioning water circuit 222 and the battery temperature control water circuit 230, and a third heat exchanger 260 is provided between the air-conditioning refrigerant circuit 221 and the battery temperature control water circuit 230.

The air conditioner includes a heater core and an evaporator. The motor water-cooling pipeline 210 includes a temperature sensor, a radiator, a first water pump, a kettle, a charger, a DC-to-DC converter (DCDC), and a controller. The air-conditioning refrigerant circuit 221 includes two temperature sensors, a pressure sensor, a temperature and pressure sensor, a compressor, a first solenoid valve, a second solenoid valve, an air-conditioning condenser, a first electronic expansion valve (EXV), a second electronic expansion valve, and a third electronic expansion valve. The air-conditioning water circuit 222 includes a second water pump, a kettle, a PTC (Positive Temperature Coefficient) heater, and a three-way valve. The battery temperature control water circuit 230 includes a third water pump, a kettle, and two temperature sensors.

The motor is connected to the oil inlet and the oil outlet of the heat exchanger 100. The air conditioner is connected to the air-conditioning refrigerant circuit 221 and the air-conditioning water circuit 222. The battery pack is connected to the battery temperature control water circuit 230. The motor water-cooling pipeline 210 is connected to the coolant inlet and the coolant outlet of the heat exchanger 100. The air-conditioning refrigerant circuit 221 is connected to the refrigerant inlet and the refrigerant outlet of the heat exchanger 100.

The thermal management system 200 includes five modes: a high-temperature driving mode, a normal-temperature driving mode, a low-temperature driving mode, a low-temperature cold-start mode, and a battery temperature maintenance mode during parking.

When the vehicle is in the high-temperature driving mode, the passenger compartment, the battery pack, and the motor all need to be cooled.

During cooling of the passenger compartment, the compressor, the first solenoid valve, and the second electronic expansion valve in the air-conditioning refrigerant circuit 221 are turned on. The refrigerant passes through the compressor and the air-conditioning condenser to become high-pressure and low-temperature refrigerant, which finally reaches the evaporator to make the air conditioner blow cold air to cool the passenger compartment.

During cooling of the battery pack, the third electronic expansion valve and the third water pump are turned on. The low-temperature refrigerant in the air-conditioning refrigerant circuit 221 takes away the heat from the battery temperature control water circuit 230 through the third heat exchanger 260, and the battery temperature control water circuit 230 cools the battery pack by using the coolant.

During cooling of the motor, the first water pump in the motor water-cooling pipeline 210 is turned on. The motor takes the heat to the heat exchanger 100 through the oil channel, and the coolant in the motor water-cooling pipeline 210 takes away the heat from the oil channel through the heat exchanger 100, flows through the radiator to dissipate the heat, and then flows into the heat exchanger 100 again, so as to circulate the heat dissipation for the motor. When the cooling capacity of the motor water-cooling pipeline 210 is insufficient, the first electronic expansion valve is turned on, and the low-temperature refrigerant in the air-conditioning refrigerant circuit 221 takes away the heat from the oil channel through the heat exchanger 100, so as to cool the motor.

In this embodiment, the air-conditioning refrigerant circuit 221 assists the motor water-cooling pipeline 210 in cooling the motor, and the refrigerant directly exchanges heat with the oil, such that the cooling capacity is greatly enhanced, and the continuous power of the motor can be significantly increased.

When the vehicle is in the normal-temperature driving mode, the passenger compartment does not need to be cooled, the motor needs to be cooled, and the battery pack is cooled on demand.

During cooling of the motor, the first water pump in the motor water-cooling pipeline 210 is turned on. The motor takes the heat to the heat exchanger 100 through the oil channel, and the coolant in the motor water-cooling pipeline 210 takes away the heat from the oil channel through the heat exchanger 100, flows through the radiator to dissipate the heat, and then flows into the heat exchanger 100 again, so as to circulate the heat dissipation for the motor. At this time, the motor is cooled by the coolant through the motor water-cooling pipeline 210 without the assistance of the refrigerant, thereby saving energy consumption.

During cooling of the battery pack, the compressor, the first solenoid valve, and the third electronic expansion valve in the air-conditioning refrigerant circuit 221 are turned on, and the third water pump is turned on. The refrigerant passes through the compressor and the air-conditioning condenser to the third heat exchanger 260. The low-temperature refrigerant cools the battery temperature control water circuit 230 through the third heat exchanger 260, and the battery temperature control water circuit 230 cools the battery pack by using the coolant.

When the vehicle is in the low-temperature driving mode, the motor needs to be cooled, and the passenger compartment and the battery pack need to be heated.

During cooling of the motor, the compressor is in operation, the second solenoid valve is turned on, and the first electronic expansion valve is turned on. The refrigerant takes away the heat from the oil channel through the heat exchanger 100 and reaches the compressor, where the refrigerant is compressed into a high-temperature and high-pressure state, and the high-temperature refrigerant reaches the first heat exchanger 240. The high-temperature refrigerant exchanges heat in the first heat exchanger 240 to the air-conditioning water circuit 222, flows out of the first heat exchanger 240, and then passes through the second solenoid valve and the first electronic expansion valve to enter the heat exchanger 100 again, so as to circulate the heat dissipation for the motor. Due to the extremely low temperature of the refrigerant after passing through the first electronic expansion valve, the temperature difference between the refrigerant and the oil is large, enabling the heat dissipation and residual heat recovery of the motor more efficiently. When the cooling capacity of the refrigerant is insufficient, the first water pump is turned on, and the motor water-cooling pipeline 210 begins to be involved in the cooling of the motor.

During heating of the passenger compartment, the second water pump is turned on, and the air-conditioning water circuit 222 delivers the heat obtained from the first heat exchanger 240 to the heater core through the three-way valve, such that the air conditioner blows warm air to heat the passenger compartment. During heating of the battery pack, the third water pump is turned on. The air-conditioning water circuit 222 delivers the heat obtained from the first heat exchanger 240 to the second heat exchanger 250 through the three-way valve, and exchanges the heat in the second heat exchanger 250 to the battery temperature control water circuit 230, and the battery temperature control water circuit 230 heats the battery pack by using the coolant. When the heat obtained by the air-conditioning water circuit 222 from the first heat exchanger 240 is insufficient, the PTC auxiliary heater is turned on to heat the air-conditioning water circuit 222, so as to ensure the heating of the passenger compartment and the battery pack.

When the vehicle is in the low-temperature cold-start mode, the battery pack and the passenger compartment are in urgent need of heating. At this time, the ambient temperature is so low that the heat pump (not shown) can hardly work. In this case, the second solenoid valve is turned on and the first electronic expansion valve is turned on. The motor is turned on for self-heating to heat the oil, and the air-conditioning refrigerant circuit 221 absorbs heat from the motor to heat the air conditioner through the first heat exchanger 240 and the air-conditioning water circuit 222, and heats the battery pack through the second heat exchanger 250 and the battery temperature control water circuit 230.

Since the temperature of the refrigerant after passing through the first electronic expansion valve is about -10°C, the temperature of the oil heated by the self-heating of the motor does not need to rise too high, and it is expected that the function of the heat pump can be restored when the temperature of the oil is 10°C or less, allowing rapid heating of the passenger compartment and the battery pack.

When the vehicle is in the battery temperature maintenance mode during parking, since the motor still has residual heat after parking, the motor residual heat recovery mode can be enabled at this time, so as to recover the heat from the motor with the refrigerant, and heat the battery pack by the heat pump to maintain the temperature of the battery pack.

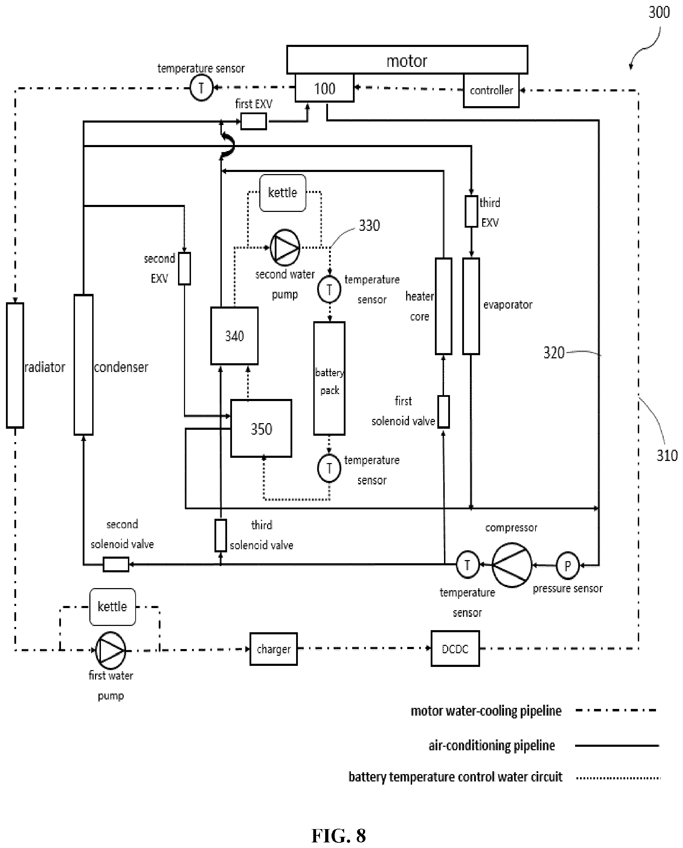

As shown in FIG. 8, the present invention further discloses a thermal management system 300, including a motor, a refrigerant-based air conditioner, a liquid-cooled battery pack, a motor water-cooling pipeline 310, an air-conditioning pipeline 320, and a battery temperature control water circuit 330. The motor is provided with the heat exchanger 100, where the heat exchanger 100 is connected to the motor water-cooling pipeline 310 and the air-conditioning pipeline 320. A first heat exchanger 340 and a second heat exchanger 350 are provided between the air-conditioning pipeline 320 and the battery temperature control water circuit 330.

The air conditioner includes a heater core and an evaporator. The motor water-cooling pipeline 310 includes a temperature sensor, a radiator, a first water pump, a kettle, a charger, a DCDC, and a controller. The air-conditioning pipeline 320 includes a temperature sensor, a pressure sensor, a compressor, a first solenoid valve, a second solenoid valve, a third solenoid valve, an air-conditioning condenser, a first electronic expansion valve (EXV), a second electronic expansion valve, and a third electronic expansion valve. The battery temperature control water circuit 330 includes a second water pump, a kettle, and two temperature sensors.

The motor is connected to the oil inlet and the oil outlet of the heat exchanger 100. The air conditioner is connected to the air-conditioning pipeline 320. The battery pack is connected to the battery temperature control water circuit 330. The motor water-cooling pipeline 310 is connected to the coolant inlet and the coolant outlet of the heat exchanger 100. The air-conditioning pipeline 320 is connected to the refrigerant inlet and the refrigerant outlet of the heat exchanger 100.

The thermal management system 300 includes five modes: a high-temperature driving mode, a normal-temperature driving mode, a low-temperature driving mode, a low-temperature cold-start mode, and a battery temperature maintenance mode during parking.

When the vehicle is in the high-temperature driving mode, the passenger compartment, the battery pack, and the motor all need to be cooled.

During cooling of the passenger compartment, the compressor, the second solenoid valve, and the third electronic expansion valve are turned on. The refrigerant passes through the compressor and the air-conditioning condenser to become high-pressure and low-temperature refrigerant, which finally reaches the evaporator to make the air conditioner blow cold air to cool the passenger compartment.

During cooling of the battery pack, the second electronic expansion valve 2 is turned on, and the second water pump is turned on. The low-temperature refrigerant cools the battery temperature control water circuit 330 through the second heat exchanger 350, and the battery temperature control water circuit 330 cools the battery pack by using the coolant.

During cooling of the motor, the first water pump in the motor water-cooling pipeline 310 is turned on. The motor takes the heat to the heat exchanger 100 through the oil channel, and the coolant takes away the heat from the oil channel through the heat exchanger 100, flows through the radiator to dissipate the heat, and then flows into the heat exchanger 100 again, so as to circulate the heat dissipation for the motor. When the cooling capacity of the motor water-cooling pipeline 310 is insufficient, the first electronic expansion valve is turned on, and the low-temperature refrigerant takes away the heat from the oil channel through the heat exchanger 100, so as to cool the motor.

In this embodiment, the refrigerant assists the coolant in cooling the motor, and the refrigerant directly exchanges heat with the oil, such that the cooling capacity is greatly enhanced, and the continuous power of the motor can be significantly increased.

When the vehicle is in the normal-temperature driving mode, the passenger compartment does not need to be cooled, the motor needs to be cooled, and the battery pack is cooled on demand.

During cooling of the motor, the first water pump in the motor water-cooling pipeline 310 is turned on. The motor takes the heat to the heat exchanger 100 through the oil channel, and the coolant takes away the heat from the oil channel through the heat exchanger 100, flows through the radiator to dissipate the heat, and then flows into the heat exchanger 100 again, so as to circulate the heat dissipation for the motor. At this time, the motor is cooled by the motor water-cooling pipeline 310, i.e., water circuit, without the assistance of the refrigerant, thereby saving energy consumption.

During cooling of the battery pack, the compressor is turned on, the second solenoid valve is turned on, the second electronic expansion valve is turned on, and the second water pump is turned on. The refrigerant passes through the compressor and the air-conditioning condenser to the second heat exchanger 350. The low-temperature refrigerant cools the battery temperature control water circuit 330 through the second heat exchanger 350, and the battery temperature control water circuit 330 cools the battery pack by using the coolant.

When the vehicle is in the low-temperature driving mode, the passenger compartment and the battery pack need to be heated, and the motor needs to be cooled.

At this time, the first solenoid valve is turned on, the third solenoid valve is turned on, the first electronic expansion valve is turned on, the second water pump is in operation, and the compressor is in operation. The refrigerant takes away the heat from the oil channel through the heat exchanger 100, reaches the compressor, and is compressed into high-temperature refrigerant, which directly passes through the first solenoid valve to the heater core, so as to make the air conditioner blow warm air to heat the passenger compartment. At the same time, the high-temperature refrigerant passes through the third solenoid valve to the first heat exchanger 340, and exchanges the heat to the battery temperature control water circuit 330 in the first heat exchanger 340, and the battery temperature control water circuit 330 heats the battery pack by using the coolant.

During cooling of the motor, the refrigerant passes through the heater core and the first heat exchanger 340, and then reaches the first electronic expansion valve. The first electronic expansion valve is turned on, and the refrigerant enters the heat exchanger 100 to circulate the cooling of the motor. Due to the extremely low temperature of the refrigerant after passing through the first electronic expansion valve, the temperature difference between the refrigerant and the oil is large, enabling the residual heat recovery of the motor more efficiently. When the cooling capacity of the refrigerant is insufficient, the first water pump is turned on, and the motor water-cooling pipeline 310 is involved in the cooling of the motor.

When the vehicle is in the low-temperature cold-start mode, the battery pack and the passenger compartment are in urgent need of heating. At this time, the ambient temperature is so low that the heat pump can hardly work. In this case, the first solenoid valve is turned on, the third solenoid valve is turned on, and the first electronic expansion valve is turned on. The motor is turned on for self-heating to heat the oil, and the air-conditioning pipeline 320 absorbs heat from the motor to heat the air conditioner, and heats the battery pack through the first heat exchanger 340 and the battery temperature control water circuit 330.

Since the temperature of the refrigerant after passing through the first electronic expansion valve is about -10°C, the temperature of the oil heated by the self-heating of the motor does not need to rise too high, and it is expected that the function of the heat pump can be restored when the temperature of the oil is 10°C or less, allowing rapid heating of the passenger compartment and the battery pack.

When the vehicle is in the battery temperature maintenance mode during parking, since the motor still has residual heat after parking, the motor residual heat recovery mode can be enabled at this time, so as to recover the heat from the motor with the refrigerant, and heat the battery pack by the heat pump to maintain the temperature of the battery pack.

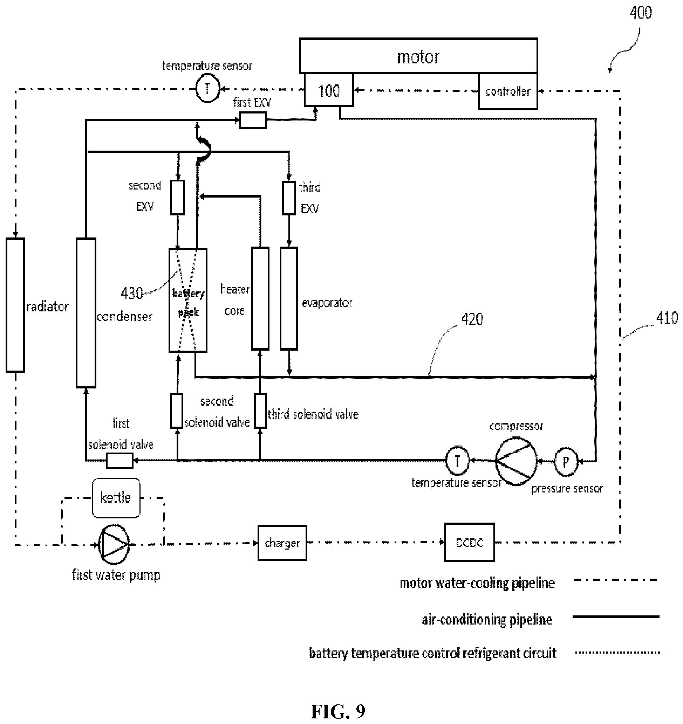

As shown in FIG. 9, the present invention further discloses a thermal management system 400, including a motor, a refrigerant-based air conditioner, a refrigerant-based battery pack, a motor water-cooling pipeline 410, an air-conditioning pipeline 420, and a battery temperature control refrigerant circuit 430. The motor is provide with the heat exchanger 100, where the heat exchanger 100 is connected to the motor water-cooling pipeline 410 and the air-conditioning pipeline 420. The air-conditioning pipeline 420 is connected to the battery temperature control refrigerant circuit 430.

The air conditioner includes a heater core and an evaporator. The motor water-cooling pipeline 410 includes a temperature sensor, a radiator, a first water pump, a kettle, a charger, a DCDC, and a controller. The air-conditioning pipeline 420 includes a temperature sensor, a pressure sensor, a compressor, a first solenoid valve, a second solenoid valve, a third solenoid valve, an air-conditioning condenser, a first electronic expansion valve, a second electronic expansion valve, and a third electronic expansion valve.

The motor is connected to the oil inlet and the oil outlet of the heat exchanger 100. The air conditioner is connected to the air-conditioning pipeline 420. The battery pack is connected to the battery temperature control refrigerant circuit 430. The motor water-cooling pipeline 410 is connected to the coolant inlet and the coolant outlet of the heat exchanger 100. The air-conditioning pipeline 420 is connected to the refrigerant inlet and the refrigerant outlet of the heat exchanger 100. The air-conditioning pipeline 420 is directly connected to the battery temperature control refrigerant circuit 430.

The thermal management system 400 includes five modes: a high-temperature driving mode, a normal-temperature driving mode, a low-temperature driving mode, a low-temperature cold-start mode, and a battery temperature maintenance mode during parking.

The motor water-cooling pipeline 410 is operated with the coolant. The air-conditioning pipeline 420 is operated with the refrigerant. The battery temperature control refrigerant circuit 430 is operated with the refrigerant. At this time, the operating mechanism of the motor water-cooling pipeline 410 and the air-conditioning pipeline 420 in various modes is the same as that in the thermal management system 300, while the operating mechanism of the battery temperature control refrigerant circuit 430 is different from that in the thermal management system 300.

When the battery pack needs to be cooled in the high-temperature driving mode and the normal-temperature driving mode, the compressor is turned on, the second solenoid valve is turned on, and the second electronic expansion valve is turned on. At this time, the battery temperature control refrigerant circuit 430 cools the battery pack directly through the refrigerant.

When the battery pack needs to be heated in the low-temperature driving mode, the low-temperature cold-start mode, and the battery temperature maintenance mode during parking, the compressor is turned on, and the second solenoid valve is turned on. At this time, the refrigerant carries the heat from the motor, passes through the compressor, and then passes through the second solenoid valve to the battery temperature control refrigerant circuit 430, which heats the battery pack directly through the refrigerant. After the battery pack is heated through the refrigerant, the refrigerant reaches the first electronic expansion valve, the first electronic expansion valve is turned on, and the refrigerant exchanges heat with the motor through the heat exchanger 100, so as to complete the cycle.

Specific embodiments of the present invention have been described as above. Other embodiments fall within the scope of the appended claims. In some cases, actions or steps recited in the claims may be performed in a different order than in the embodiments and still achieve desirable results. In addition, the processes depicted in the drawings do not necessarily require the particular order or sequential order shown to achieve desirable results. Multitasking processing and parallel processing are also possible or may be advantageous in some embodiments.

Other embodiments of the present invention will occur to those skilled in the art upon consideration of the specification and practice of the invention disclosed herein. The present invention is intended to cover any variations, uses, or adaptations of the present invention that follow the general principles of the present invention and include common general knowledge or customary technical means in the art not disclosed herein. It is intended that the specification and embodiments be considered as exemplary only, with a true scope and spirit of the present invention being indicated by the following claims.

It should be understood that the present invention is not limited to the precise structures which have been described above and illustrated in the accompanying drawings, and that various modifications and changes may be made without departing from the scope thereof. The scope of the present invention is limited only by the appended claims.

The foregoing only illustrate some of embodiments of the present invention, and are not intended to limit the present invention. Any modification, equivalent substitution, improvement, etc. made within the spirit and principle of the present invention shall be included in the scope of protection of the present invention.

## Claims

1. A heat exchanger (100), which can directly perform heat exchange among an oil, a coolant, and a refrigerant, the heat exchanger (100) comprising a multilayer plate assembly (10), wherein the multilayer plate assembly (10) comprises a refrigerant plate (11), an oil plate (12), and a coolant plate (13) which are stacked, and the multilayer plate assembly (10) further comprises a refrigerant cavity (113), an oil cavity (124), and a coolant cavity (134) which are defined by the refrigerant plate (11), the oil plate (12), and the coolant plate (13).

2. The heat exchanger (100) of claim 1, wherein the refrigerant plate (11), the oil plate (12), and the coolant plate (13) each comprise a main plate portion (114, 125, 135) and a side plate portion (115, 126, 136) extending downwardly from a periphery of the main plate portion (114, 125, 135); and
the refrigerant plate (11) defines a top surface and a side surface of the refrigerant cavity (113), the oil plate (12) defines a top surface and a side surface of the oil cavity (124), and the coolant plate (13) defines a top surface and a side surface of the coolant cavity (134).

3. The heat exchanger (100) of claim 2, wherein a plurality of protrusions (133) are provided on the main plate portion (135) of the coolant plate (13) and protrude toward the coolant cavity (134), and
a fin (123) is provided within the oil cavity (124).

4. The heat exchanger (100) of claim 1, wherein the oil plate (12) is disposed between the refrigerant plate (11) and the coolant plate (13).

5. The heat exchanger (100) of claim 1, wherein there are a plurality of multilayer plate assemblies (10) in the heat exchanger (100); and
refrigerant cavities (113) in the plurality of multilayer plate assemblies (10) are communicated with each other through a refrigerant channel, oil cavities (124) in the plurality of multilayer plate assemblies (10) are communicated with each other through an oil channel, and coolant cavities (134) in the plurality of multilayer plate assemblies (10) are communicated with each other through a coolant channel, the refrigerant channel, the oil channel, and the coolant channel each passing through refrigerant plates (11), oil plates (12), and coolant plates (13) of the plurality of multilayer plate assemblies (10).

6. The heat exchanger (100) of claim 5, wherein the refrigerant channel comprises a refrigerant inflow channel (111) and a refrigerant outflow channel (112), the oil channel comprises an oil inflow channel (121) and an oil outflow channel (122), and the coolant channel comprises a coolant inflow channel (131) and a coolant outflow channel (132); and
the refrigerant plates (11), the oil plates (12), and the coolant plates (13) are each provided with six through holes (14), for the refrigerant inflow channel (111), the refrigerant outflow channel (112), the oil inflow channel (121), the oil outflow channel (122), the coolant inflow channel (131), and the coolant outflow channel (132) to pass through, respectively.

7. The heat exchanger (100) of claim 6, wherein the refrigerant inflow channel (111), the oil outflow channel (122), and the coolant inflow channel (131) are located on one side of the plurality of multilayer plate assemblies (10); and
the refrigerant outflow channel (112), the oil inflow channel (121), and the coolant outflow channel (132) are located on the other side of the plurality of multilayer plate assemblies (10).

8. The heat exchanger (100) of claim 7, wherein the refrigerant inflow channel (111) and the refrigerant outflow channel (112) are respectively communicated with a refrigerant inlet (31) and a refrigerant outlet (32), the oil inflow channel (121) and the oil outflow channel (122) are respectively communicated with an oil inlet (23) and an oil outlet (24), and the coolant inflow channel (131) and the coolant outflow channel (132) are respectively communicated with a coolant inlet (21) and a coolant outlet (22); and
the refrigerant inlet (31) and the refrigerant outlet (32) are disposed at a top of the heat exchanger (100), and the oil inlet (23), the oil outlet (24), the coolant inlet (21), and the coolant outlet (22) are disposed at a bottom of the heat exchanger (100).

9. The heat exchanger (100) of claim 6, wherein the coolant inflow channel (131) and the coolant outflow channel (132) are provided at one pair of diagonal corners of the multilayer plate assemblies (10), and the oil inflow channel (121) and the oil outflow channel (122) are provided at the other pair of diagonal corners of the multilayer plate assemblies (10).

10. The heat exchanger (100) of claim 7, wherein the oil channel has a diameter the same as a diameter of the coolant channel, and the refrigerant channel has a diameter smaller than the diameter of the oil channel and the diameter of the coolant channel; and
the refrigerant channel is located between the oil channel and the coolant channel on a same side of the plurality of multilayer plate assemblies (10).

11. The heat exchanger (100) of claim 2, further comprising a base plate (20) provided at a bottom thereof,
wherein a bottom surface of an upper one of the refrigerant cavity (113), the oil cavity (124), and the coolant cavity (134) is defined by the oil plate (12), the coolant plate (13), or the refrigerant plate (11) adjacent to the upper one; and
a bottom surface of a lowermost one of the refrigerant cavity (113), the oil cavity (124), and the coolant cavity (134) is defined by the base plate (20).

12. The heat exchanger (100) of claim 2, wherein adjacent two of the refrigerant plate (11), the oil plate (12), and the coolant plate (13) are connected to each other by aluminum alloy brazing; and
the coolant comprises water.

13. A thermal management system, comprising a motor, a liquid-cooled air conditioner, a liquid-cooled battery pack, a motor water-cooling pipeline (210), an air-conditioning refrigerant circuit (221), an air-conditioning water circuit (222), and a battery temperature control water circuit (230),
wherein the motor is provided with the heat exchanger (100) of any one of claims 1-12, and the heat exchanger (100) is connected to the motor water-cooling pipeline (210) and the air-conditioning refrigerant circuit (221); and
a first heat exchanger (240) is provided between the air-conditioning refrigerant circuit (221) and the air-conditioning water circuit (222), and a second heat exchanger (250) is provided between the air-conditioning water circuit (222) and the battery temperature control water circuit (230).

14. The thermal management system of claim 13, wherein the thermal management system has five modes comprising a high-temperature driving mode, a normal-temperature driving mode, a low-temperature driving mode, a low-temperature cold-start mode, and a battery temperature maintenance mode during parking,
wherein
in the high-temperature driving mode, the motor is cooled through the motor water-cooling pipeline (210), and when the motor is not cooled sufficiently through the motor water-cooling pipeline (210), the air-conditioning refrigerant circuit (221) assists in cooling the motor through the heat exchanger (100);
in the normal-temperature driving mode, the motor is cooled through the motor water-cooling pipeline (210), and the air-conditioning refrigerant circuit (221) is not involved in cooling the motor;
in the low-temperature driving mode, the air-conditioning refrigerant circuit (221) recovers heat from the motor through the heat exchanger (100), heats the air conditioner through the first heat exchanger (240) and the air-conditioning water circuit (222), and heats the battery pack through the second heat exchanger (250) and the battery temperature control water circuit (230);
in the low-temperature cold-start mode, the motor heats itself, and the air-conditioning refrigerant circuit (221) absorbs heat from the motor through the heat exchanger (100), heats the air conditioner through the first heat exchanger (240) and the air-conditioning water circuit (222), and heats the battery pack through the second heat exchanger (250) and the battery temperature control water circuit (230); and
in the battery temperature maintenance mode during parking, the motor has residual heat, and the air-conditioning refrigerant circuit (221) recovers the residual heat from the motor through the heat exchanger (100) to heat the battery pack.

15. A thermal management system, comprising a motor, a refrigerant-based air conditioner, a liquid-cooled battery pack, a motor water-cooling pipeline (310), an air-conditioning pipeline (320), and a battery temperature control water circuit (330),
wherein the motor is provided with the heat exchanger (100) of any one of claims 1-12, and the heat exchanger (100) is connected to the motor water-cooling pipeline (310) and the air-conditioning pipeline (320); and
a first heat exchanger (340) is provided between the air-conditioning pipeline (320) and the battery temperature control water circuit (330).

16. The thermal management system of claim 15, wherein the thermal management system has five modes comprising a high-temperature driving mode, a normal-temperature driving mode, a low-temperature driving mode, a low-temperature cold-start mode, and a battery temperature maintenance mode during parking,
wherein
in the high-temperature driving mode, the motor is cooled through the motor water-cooling pipeline (310), and when the motor is not cooled sufficiently through the motor water-cooling pipeline (310), the air-conditioning pipeline (320) assists in cooling the motor through the heat exchanger (100);
in the normal-temperature driving mode, the motor is cooled through the motor water-cooling pipeline (310), and the air-conditioning pipeline (320) is not involved in cooling the motor;
in the low-temperature driving mode, the air-conditioning pipeline (320) recovers heat from the motor through the heat exchanger (100) to heat the air-conditioner, and heats he battery pack through the first heat exchanger (340) and the battery temperature control water circuit (330);
in the low-temperature cold-start mode, the motor heats itself, and the air-conditioning pipeline (320) absorbs heat from the motor through the heat exchanger (100) to heat the air conditioner, and heats the battery pack through the first heat exchanger (340) and the battery temperature control water circuit (330); and
in the battery temperature maintenance mode during parking, the motor has residual heat, and the air-conditioning pipeline (320) recovers the residual heat from the motor through the heat exchanger (100) to heat the battery pack.

17. A thermal management system, comprising a motor, a refrigerant-based air conditioner, a refrigerant-based battery pack, a motor water-cooling pipeline (410), an air-conditioning pipeline (420), and a battery temperature control refrigerant circuit (430),
wherein the motor is provided with the heat exchanger (100) of any one of claims 1-12, and the heat exchanger (100) is connected to the motor water-cooling pipeline (410) and the air-conditioning pipeline (420), and
the air-conditioning pipeline (420) is connected to the battery temperature control refrigerant circuit (430).

18. The thermal management system of claim 17, wherein the thermal management system has five modes comprising a high-temperature driving mode, a normal-temperature driving mode, a low-temperature driving mode, a low-temperature cold-start mode, and a battery temperature maintenance mode during parking,
wherein
in the high-temperature driving mode, the motor is cooled through the motor water-cooling pipeline (410), and when the motor is not cooled sufficiently through the motor water-cooling pipeline (410), the air-conditioning pipeline (420) assists in cooling the motor through the heat exchanger (100);
in the normal-temperature driving mode, the motor is cooled through the motor water-cooling pipeline (410), and the air-conditioning pipeline (420) is not involved in cooling the motor;
in the low-temperature driving mode, the air-conditioning pipeline (420) recovers heat from the motor through the heat exchanger (100) to heat the air conditioner, and heats the battery pack through the battery temperature control refrigerant circuit (430);
in the low-temperature cold-start mode, the motor heats itself, and the air-conditioning pipeline (420) recovers heat from the motor through the heat exchanger (100) to heat the air conditioner, and heats the battery pack through the battery temperature control refrigerant circuit (430); and
in the battery temperature maintenance mode during parking, the motor has residual heat, and the air-conditioning pipeline (420) recovers the residual heat from the motor through the heat exchanger (100) to heat the battery pack.
